# EUROPÄISCHE PATENTSCHRIFT

(11) **EP 1 017 154 B1**
(45) Veröffentlichungstag und Bekanntmachung des Hinweises auf die Patenterteilung: **29.05.2002**
(21) Anmeldenummer: 99811127.2
(22) Anmeldetag: 09.12.1999
(51) Int. Cl.: H02K 3/50

(54) **Verstärkter, druckfester Schlauch zur mechanischen Wickelkopfabstützung rotierender elektrischer Maschinen**
Reinforced, pressure resistant hose for mechanical fastening of winding heads of rotating electrical machines
Tuyau renforcé et résistant à la pression pour la fixation des têtes de bobinages de machines électriques tournantes

(30) Priorität: 28.12.1998 DE 19860413
(43) Veröffentlichungstag der Anmeldung: 05.07.2000
(73) Patentinhaber: Alstom, 75116 Paris (FR)
(72) Erfinder: Oesterheld, Jörg Dr., 5442 Fislisbach (CH); Gasparini, Rico, 5415 Rieden (CH); Baumann, Thomas Dr., 5430 Wettingen (CH)
(74) Vertreter: Liebe, Rainer

(56) Entgegenhaltungen:
- WO-A-94/06194
- US-A- 4 283 840
- US-A- 4 387 317
- US-A- 5 468 916

## Beschreibung

### Technisches Gebiet

Die Erfindung bezieht sich auf das Gebiet rotierender elektrischer Maschinen. Insbesondere betrifft die Erfindung einen verstärkten, druckfesten Schlauch zur mechanischen Wickelkopfabstützung rotierender elektrischer Maschinen.

### Stand der Technik

Bei Abstützelementen, wie sie heute in der Fabrikation von rotierenden elektrischen Maschinen verwendet werden, fassen sich verschiedene Konzepte unterscheiden.

Das erste Konzept bezieht sich auf Maschinen, deren Wicklung aus bereits fertig isolierten und damit steifen und druckbelastbaren Leiterstäben oder Spulen aufgebaut sind. Hier werden meist feste Abstützringe, beispielsweise aus Thermo- oder Duroplast, das in der Regel verstärkt ist, verwendet. Die Abstützringe stützen den Wickelkopf von aussen und innen ab. Zum Schutz der Leiter an den Kontaktflächen zwischen Abstützring und Leiter werden in der Regel plastische oder elastische, häufig aushärtbare, zum Teil imprägnierbare Zwischenlagen verwendet, die halbleitfähig ausgerüstet sein können. Die Verspannung der Abstützringe gegenüber dem Wickelkopf erfolgt meistens mit Keilsystemen.

Bei Maschinen, bei denen der komplette Stator einer Imprägnierung unterworfen wird, wird ein anders Abstützkonzept angewendet. Hier werden Glaskordeln, d.h. verkordelte Glasdochte, bzw. gefüllte Glasschläuche, d.h. axial gebündelte, unidirektionale oder gestrickte Glasdochte, um die Schläuche aus gewebten Glasdochten einen Mantel bilden, ringförmig in einen Wickelkopf eingelegt. Diese Kordeln bzw. Schläuche werden beim Tränken des Stators imprägniert und bilden im ausgehärteten Zustand einen festen, radialen Abstützring, der bei gestopfter oder geschlaufter Verlegung zusätzlich auch noch die Abstützung und Distanzierung zwischen den einzelnen Leitern übernimmt.

Schliesslich werden bei einem dritten Abstützkonzept für Wickelköpfe von vollisolierten Wicklungen druckfeste Schläuche, wie z.B. Feuerwehrschläuche verwendet, die im trockenen Zustand in geeigneter Weise, ähnlich den vorstehend beschriebenen Kordeln um den Wickelkopf gelegt werden. Dabei können die Schläuche einfach nur ringörmig um und in die Wickelköpfe gelegt werden, wo sie dann durch andere Elemente fixiert werden, oder sie können zwischen den Leitern hindurchgeschlungen oder zwischen die Leiter gestopft werden. Nachdem alles vorbereitet ist, wird der Schlauch mit einem dünnflüssigen Harz oder einem Harz mit pulver- oder faserförmigen Füllstoffen, das vorzugsweise kalthärtend ist, gefüllt. Nach dem Aushärten ergeben sich feste Ringe, die optimal an die Form des Wickelkopfes angepasst sind.

Jedoch weisen alle diese vorstehend genannten Abstützkonzepte bestimmte Nachteile auf.

Beim ersten Abstützkonzept ist relativ Handarbeit erforderlich bzw. es muss dabei zum Teil mit arbeitshygienisch problematischen Materialien, beispielsweise Glasvlies oder Binderharzen, umgegangen werden. Darüberhinaus ist die Aushärtung von Bindemitteln zeitaufwendig oder benötigt eventuell sogar einen zusätzlichen Wärmeprozess. Aussderdem kann es bei der Verwendung von kalthärtenden Zwischenlagen im Betrieb, d.h. bei einer Erwärmung, dazu kommen, dass durch Kriechen dieses Materials unter mechanischer Dauerbelastung die Vorspannung der Abstützringe auf die Leiter nachlässt und der Wickelkopf damit eher zu Schwingungen und Vibrationen neigt.

Dahingegen besteht der Hauptnachteil des zweiten Konzepts in der notwendigen Imprägnierung. Bei Maschinen, bei denen diese Imprägnierung nicht möglich ist, entfällt dies Variante oder ist durch eine arbeitshygienisch zweifelhafte Injektion von Harz in die Kordeln entlang der gesamten Kordellänge mittels Spritzen zu ersetzen. Die mechanische Qualität der ausgehärteten Kordeln ist jedoch wegen der unzureichenden Harzdurchdringung durch viel enthaltene Luft schlechter als bei einer Vakuum-Druckimprägnierung.

Schliesslich ist beim dritten Abstützkonzept die mechanische Steifigkeit bei mit Reinharz gefüllten Schläuchen insbesondere bei höheren Temperaturen und ganz besonders für kalthärtende Harze eingeschränkt. Andererseits ist bei Verwendung von gefüllten Harzen die Verarbeitbarkeit stark eingeschränkt, da die Füllstoffe die Viskosität der Füllmasse deutlich erhöhen, so dass nur relativ kurze und knickfreie Schläuche problemlos gefüllt werden können.

### Darstellung der Erfindung

Angesichts dieser Probleme bei den herkömmlichen Abstützkonzepten ist es Aufgabe der vorliegenden Erfindung, ein Bauteil auszubilden, mit dem eine einfache montierbare, leicht anpass- und einstellbare, hoch-steife Abstützung von Leitern im Wickelkopf rotierender elektrischer Maschinen mit minimalem mechanischem Kriechen ausgebildet werden kann. Möglichst sollte auch eine Vermeidung von Lösungsmitteln und Flüssigklebern oder Lacken in offenem Umgang mit der Umgebung erreichbar sein.

Erfindungsgemäss wird diese Aufgabe durch die im kennzeichnenden Teil des Anspruchs 1 angegebenen Massnahmen gelöst. Weitere vorteilhafte Ausgestaltungen und Weiterbildungen der Erfindung sind in den Unteransprüchen angegeben. Ein Verfahren zur Herstellung eines Schlauchs gemäß einem zweiten Aspeht der Erfindung ist in Anspruch 7 angegeben.

### Kurze Beschreibung der Zeichnung

Nachfolgend wird die Erfindung anhand von in der Zeichnung dargestellten Ausführungsformen näher erläutert.

Es zeigen:
Fig. 1 einen erfindungsgemässen verstärkten, druckfesten Schlauch und
Fig. 2 einen herkömmlichen druckfesten Schlauch in Form eines Standard-Feuerwehrschlauches.

### Weg(e) zur Ausführung der Erfindung

Die Erfindung ist darauf gerichtet, eine mechanische Abstützung von Leitern im Wickelkopf von rotierenden elektrischen Maschinen auszubilden. Hierfür sollen füllbare, druckfeste Schläuche verschiedener Konfektionierung verwendet werden.

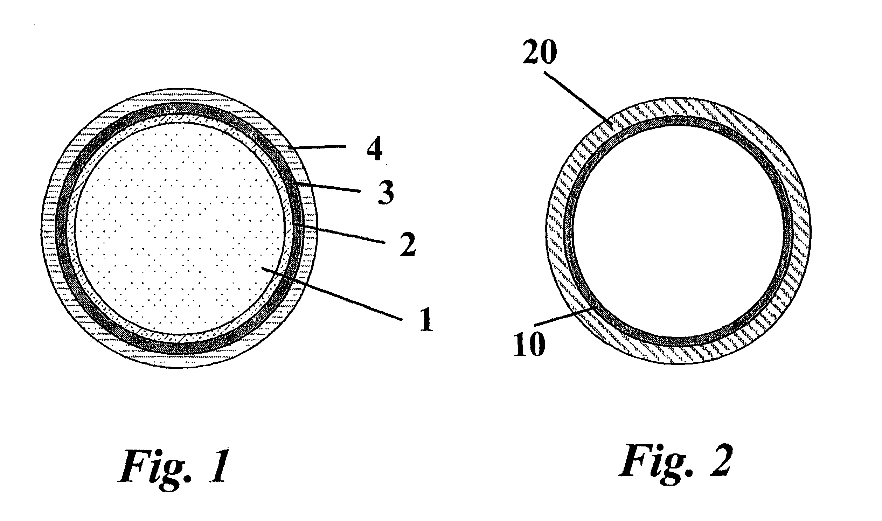

Bei herkömmlichen druckfesten Schläuchen handelt es sich um Standard-Feuerwehrschläuche, die aus einem dichte gewebten Glasgewebeschlauch 20 bestehen, der innen mit einer gas- und flüssigkeitsdichten flexiblen Imprägnierung 10 versehen ist. Ein derartiger druckfester Schlauch gemäss dem Stand der Technik ist in Fig. 2 gezeigt.

Im Vergleich zum Stand der Technik ist der erfindungsgemässe verstärkte, druckfeste Schlauch jedoch anders aufgebaut. Ein Glasfaserbündel 1 wird von einem mehr oder weniger dichtgewebten, inneren Glasgewebeschlauch 2 umhüllt, der auf der Aussenseite mit einer gas- und flüssigkeitsdichten, flexiblen Polymerschicht 3 ausgerüstet ist. Diese Polymerschicht ist wiederum durch einen dichtgeweben, äusseren Glasgewebeschlauch 4 umhüllt. Dieser Aufbau des erfindungsgemässen Schlauchs ist in Fig. 1 veranschaulicht.

Die einzelnen Schichten des Schlauchs können wiederum verschieden aufgebaut sein. Die verschiedenen Möglichkeiten des Aufbaus werden im folgenden erläutert.

Zunächst einmal kann das Glasfaserbündel 1 aus unidirektionalen Glasfasern, unidirektionalen Glasfaserdochten, ineinanderliegenden Schichten von Glasgewebeschläuchen oder gestrickten Glasfaserdochten unterschiedlicher Durchmesser bestehen. Aufgrund der besten zu erwartenden axialen Kapillarwirkung ist die Verwendung von gestrickten Glasfaserdochten unterschiedlicher Durchmesser am vorteilhaftesten.

Weitere Ausführungsformen unterscheiden sich nicht nur hinsichtlich ihres Aufbaus, sondern auch hinsichtlich ihrer Herstellung.

Erstens kann die Polymerschicht 3, die den das Glasfaserbündel 1 einschliessenden Glasgewebeschlauch 2 umhüllt, durch Extrudieren einer Polymerschicht auf den gefüllten Schlauch oder durch ein- oder mehrmaliges Lackieren der Schlauchoberfläche mit einem Polymer oder einer Polymerlösung erzeugt werden. Dabei sollte das Polymer im gebrauchsfertigen Zustand vorzugsweise gummielastische Eigenschaften aufweisen.

Die Befestigung des Schlauchs mit Wicklungselementen kann zudem durch Umbinden mit vorzugsweise imprägnierten, im B-Zustand befindlichen gewebebändern oder -kordeln erfolgen, die bei einer späteren Wärmebehandlung ausgehärtet werden. Zudem kann eine Verklebung des Schlauchs mit abzustützenden Wicklungselementen in diesem Fall durch zusätzliches Aufbringen von Klebstoffen an Kontaktstellen oder durch späteres Eindringen von Kleber-Lack bei einer Lackierung des gesamten Wickelkopfes erzeugt werden.

Darüberhinaus kann in einer weiteren Ausführungsform die Polymerschicht 3 für das später unter Druck eingefüllte Matrix-Polymer in geringem Masse permeabel sein. Das heisst, zu Beginn des Füllvorgangs ist die Polymerschicht insoweit durchlässig, dass das Matrix-Polymer in geringem Masse die Polymerschicht 3 durchdringt und von dem Gewebe des äusseren Glasgewebeschlauchs 4 kapillar aufgenommen bzw. aufgesaugt wird. Durch einzelne oder gemeinsame Quellen der Polymerschicht 3 und/oder des Matrix-Polymer imprägnierten äusseren Glasgewebeschlauchs 4 und/oder zunehmende Viskosität des Matrix-Polymers und/oder Verkleben der permeablen Kanäle wird dann ein weiteres Austreten von Matrix-Polymer unterbunden. Die Menge des Matrix-Polymeraustritts ist durch geeignete Wahl der Mikroporosität der Polymerschicht 3 bzw. geeignete Wahl der Struktur des äusseren Glasgewebeschlauchs 4 in Kombination mit den Viskositätseigenschaften des Matrix-Polymers vorzugsweise so zu justieren, dass einerseits genügend Matrix-Polymer austritt, um eine gleichmässige Imprägnierung des äusseren Glasgewebeschlauchs 4 zu erzeugen, welche eine ausreichende Verklebung des äusseren Glasgewebeschlauchs 4 mit den abzustützenden Wicklungselementen gewährleisten kann. Andererseits muss der Austritt an Matrix-Polymer so weit begrenzt werden, dass weder eine Tropfenbildung noch ein Auslaufen von Matrix-Polymer erfolgen kann.

In einer weiteren Ausführungsform wird die Verklebung des Abstützelements mit den Wicklungselementen unter Beibehaltung einer gas- und flüssigkeitsdichten, d.h. nicht permeablen Polymerschicht 3 dadurch erreicht, dass der äussere Glasgewebeschlauch 4 zum Abschluss der Fabrikation mit einer Polymerschicht versehen wird, welche im B-Zustand verbleibt, nach der Montage in einem Wärmeprozess aufschmilzt sowie aushärtet und dabei Abstützelement und Wicklungselemente kraftschlüssig miteinander verbindet.

In einer anderen vorzugsweise zu wählenden Ausführung besteht das Matrix-Polymer aus einem warmhärtenden Harz, welches möglichst dünnflüssig ist, um eine gute Imprägnierung und gute Füllung langer Schläuche zu erreichen, und bei Raumtemperatur durch entsprechende Hilfsstoffe eine Quasi-Aushärtung erfährt. Damit ist für das Aushärten kein spezieller Wärmeprozess notwendig. Die vollständigen, guten mechanischen Eigenschaften des warmhärtenden Systems erhält die Abstützung dann beim Einfahren und der damit verbundenen Erwärmung der Maschine.

Für Maschinen mit geringer thermischer Beanspruchung ist es sinnvoll, als Matrix-Polymer ein kalthärtendes Harzsystem zu verwenden. Auch hier entfällt ein zusätzlicher Wärmeprozess. Die schlechteren mechanischen Eigenschaften von kalthärtenden Materialien bei höheren Temperaturen sind in diesem Fall wegen der geringen thermischen Ausnutzung der Maschine aufgrund der niedrigen Betriebstemperaturen unproblematisch.

In einer weiteren Ausführungsform können auch warmhärtende Harze als Matrix-Polymer verwendet werden. Dies ist dann sinnvoll, wenn aus anderen Gründen ein Wärmeprozess notwendig ist, der dann auch die Aushärtung der Abstützelemente mit übernimmt.

In speziellen Ausführungen kann auch ein warmhärtendes Matrix-Polymer verwendet werden, ohne dass ein Wärmeprozess bzw. Ofenprozess notwendig ist. In diesem Fall sind dem Harz entsprechende Füller beizugeben, die z.B. durch induktive oder kapazitive Anregung, beispielsweise durch Mikrowellen, Verluste und damit Wärme erzeugen, so dass eine Aushärtung des Matrix-Polymers erfolgt. Alternativ können der Schlauch oder Teile des Schlauchs auch so ausgerüstet sein, dass durch Anlegen von Spannung resistiv Wärme erzeugt werden kann, z.B. durch integrierte Heizbänder.

## Patentansprüche

1. Verstärkter, druckfester Schlauch zur mechanischen Wickelkopfabstützung rotierender Maschinen, **gekennzeichnet durch**:
ein Glasfaserbündel (1),
einen dichtgewebten, inneren Glasgewebeschlauch (2), der das Glasfaserbündel (1) umhüllt,
eine aussen auf den Glasgewebeschlauch (2) aufgebrachte, flexible Polymerschicht (3) und
einen, diese Polymerschicht (3) umgebenden, dichtgewebten, äusseren Glasgewebeschlauch (4).

2. Schlauch nach Anspruch 1, **dadurch gekennzeichnet, dass**
das Glasfaserbündel (1) aus unidirektionalen Glasfasern, unidirektionalen Glasfaserdochten, ineinanderliegenden Schichten von Glasgewebeschläuchen oder gestrickten Glasfaserdochten unterschiedlicher Durchmesser besteht.

3. Schlauch nach Anspruch 1, **dadurch gekennzeichnet, dass**
die Polymerschicht (3) im gebrauchsfertigen Zustand gummielastische Eigenschaften besitzt.

4. Schlauch nach Anspruch 1, **dadurch gekennzeichnet, dass**
die Polymerschicht (3) gas- und flüssigkeitsdicht ist.

5. Schlauch nach Anspruch 1, **dadurch gekennzeichnet, dass**
die Polymerschicht (3) ein bestimmtes Mass an Mikroporosität aufweist, so dass sie für unter Druck in den inneren Glasgewebeschlauch (2) einfüllbares Matrix-Polymer in geringem Masse permeabel ist.

6. Schlauch nach Anspruch 1, **dadurch gekennzeichnet, dass**
ein in den inneren Glasgewebeschlauch (2) einzufüllendes Matrix-Polymer aus warmhärtendem, möglichst dünnflüssigen Harz, das einen Füllstoff enthalten kann, oder
aus einem kalthärtenden Harzsystem besteht.

7. Schlauch nach Anspruch 1, **dadurch gekennzeichnet, dass**
Teile des inneren Glasgewebeschlauches (2) integrierte Heizbänder aufweisen, die zur Aushärtung eines im inneren Glasgewebeschlauch (2) enthaltenen Matrix-Polymers durch Anlegen von Spannung resistiv Wärme erzeugen können.

8. Verfahren zur Herstellung eines verstärkten, druckfesten Schlauchs zur mechanischen Wickelkopf-Abstützung rotierender elektrischer Maschinen, **gekennzeichnet durch die Schritte:**
Umhüllen eines Glasfaserbündels (1) mit einem inneren Glasgewebeschlauch (2),
Extrudieren einer Polymerschicht (3) auf dem gefüllten inneren Glasgewebeschlauch (2) oder zumindest einmaliges Lackieren der Oberfläche des inneren Glasgewebeschlauches (8) mit einem Polymer oder einer Polymerlösung, und
Umhüllen des inneren Glasgewebeschlauchs (2) mit der Polymerschicht mit einem äusseren Glasgewebeschlauch (4).

9. Verfahren nach Anspruch 8, **gekennzeichnet durch** den weiteren Schritt Befestigen des Schlauchs mit Wicklungselementen **durch** Umbinden mit imprägnierten, im B-Zustand befindlichen Gewebebändern oder -korderin und Aushärten dieser Gewebebänder oder -kordeln bei einer Wärmebehandlung oder
Verkleben des Schlauchs mit abzustützenden Wicklungselementen **durch** zusätzliches Aufbringen von Klebstoffen an Kontaktstellen oder **durch** späteres Eindringen von Kleber-Lack beim Lackieren des gesamten Wickelkopfes.

10. Verfahren nach Anspruch 9, **gekennzeichnet durch** die weiteren Schritte:
Beschichten des äusseren Glasgewebeschlauches (4) bei Verwendung einer gas- und flüssigkeitsdichten Polymerschicht (3) mit einer weiteren Polymerschicht, die im B-Zustand verbleibt,
Aufschmelzen dieser Polymerschicht nach der Montage in einem Wärmeprozess und
Aushärten der weiteren Polymerschicht.

11. Verfahren nach Anspruch 7, **gekennzeichnet durch** die weiteren Schritte:
Einfüllen eines Matrix-Polymers in den inneren Glasgewebeschlauch (2), Durchdringen der Polymerschicht (3) und/oder eines Matrix-Polymer imprägnierten äusseren Glasgewebeschlauchs (4) **durch** das Matrix-Polymer und/oder Verkleben von permeablen Kanälen in der Polymerschicht (3).

12. Verfahren nach Anspruch 10, **gekennzeichnet durch** den weiteren Schritt:
Aushärten des warmhärtenden Matrix-Polymers zur Abstützung beim Einfahren der Maschine **durch** die **dadurch** entstehende Erwärmung oder
Aushärten des warmhärtenden Matrix-Polymers **durch** induktive oder kapazitive Anregung, beispielsweise **durch** Mikrowellen, oder **durch** Spannungsanlegen an Schlauchteile, in die beispielsweise Heizbänder integriert sind, wobei resistiv Wärme erzeugt wird.

## Claims

1. Reinforced, pressure-resistant flexible tube for mechanical end-winding support for rotating machines, **characterized by**:
a glass fibre bundle (1),
a thickly woven, inner glass cloth flexible tube (2) which encases the glass fibre bundle (1),
a flexible polymer layer (3) which is fitted externally on the glass cloth flexible tube (2), and
a thickly woven, outer glass cloth flexible tube (4) which surrounds this polymer layer (3).

2. Flexible tube according to Claim 1,
**characterized in that**
the glass fibre bundle (1) is composed of unidirectional glass fibres, unidirectional glass fibre rovings, interleaved layers of glass cloth flexible tubes or knitted glass fibre rovings of different diameter.

3. Flexible tube according to Claim 1,
**characterized in that**
when ready for use, the polymer layer (3) has elastomer characteristics.

4. Flexible tube according to Claim 1,
**characterized in that**
the polymer layer (3) is gastight and liquidtight.

5. Flexible tube according to Claim 1,
**characterized in that**
the polymer layer (3) has a specific level of microporosity, so that it is slightly permeable for matrix polymer which can be introduced into the inner glass cloth flexible tube (2) under pressure.

6. Flexible tube according to Claim 1,
**characterized in that**
a matrix polymer which is to be introduced into the inner glass cloth flexible tube (2) is composed of a heat-curing resin which is as non-viscous as possible and may contain a filler, or
is composed of a cold-curing resin system.

7. Flexible tube according to Claim 1,
**characterized in that**
parts of the inner glass cloth flexible tube (2) have integrated heating strips which can produce heat resistively by the application of voltage in order to cure a matrix polymer contained in the inner glass cloth flexible tube (2).

8. Method for producing a reinforced, pressure-resistant flexible tube for the mechanical end-winding support for rotating electrical machines,
**characterized by the following steps:**
encasing a glass fibre bundle (1) with an inner glass cloth flexible tube (2),
extrusion of a polymer layer (3) on the filled inner glass cloth flexible tube (2), or painting, at least once, the surface of the inner glass cloth flexible tube (8) with a polymer or a polymer solution, and
encasing the inner glass cloth flexible tube (2) with a polymer layer with an outer glass cloth flexible tube (4).

9. Method according to Claim 8, **characterized by** the following further step:
attachment of the flexible tube to winding elements by binding them with impregnated cloth strips or threads which are in the B-stage, and curing these cloth strips or threads by heat treatment, or
bonding the flexible tube with winding elements to be supported by additionally applying adhesives to contact points or by subsequent impregnation of adhesive varnish while varnishing the entire end winding.

10. Method according to Claim 9, **characterized by** the following further steps:
coating of the outer glass cloth flexible tube (4) using a gastight and liquidtight polymer layer (3) with a further polymer layer which remains in the B-stage,
melting of this polymer layer after fitting, in a heat process, and
curing of the further polymer layer.

11. Method according to Claim 7, **characterized by** the following further steps:
filling the inner glass cloth flexible tube (2) with a matrix polymer, impregnation of the polymer layer (3) and/or an outer glass cloth flexible tube (4) impregnated with a matrix polymer, with the matrix polymer and/or bonding of permeable channels in the polymer layer (3).

12. Method according to Claim 10, **characterized by** the following further step:
curing of the heat-curing matrix polymer for support while the machine is being run in, by the heating produced in the process or curing of the heat-curing matrix polymer by inductive or capacitive excitation, for example by means of microwaves, or by application of voltage to flexible tube parts in which, for example, heating strips are integrated, with heat being produced resistively.

## Revendications

1. Tuyau souple renforcé résistant à la pression pour le soutien mécanique de têtes de bobines de machines tournantes, **caractérisé par**:
- un faisceau de fibres de verre (1),
- un tuyau intérieur (2) en tissu de verre tissé serré, qui enveloppe le faisceau de fibres de verre (1),
- une couche de polymère flexible (3), déposée extérieurement sur le tuyau en tissu de verre (2), et
- un tuyau extérieur en tissu de verre (4), tissé serré, entourant cette couche de polymère (3).

2. Tuyau suivant la revendication 1, **caractérisé en ce que** le faisceau de fibres de verre (1) se compose de fibres de verre unidirectionnelles, de mèches de fibres de verre unidirectionnelles, de couches imbriquées de tuyaux en tissu de verre ou de mèches de fibres de verre tricotées de différents diamètres.

3. Tuyau suivant la revendication 1, **caractérisé en ce que** la couche de polymère (3) prête à l'emploi possède des propriétés de gomme élastique.

4. Tuyau suivant la revendication 1, **caractérisé en ce que** la couche de polymère (3) est étanche aux gaz et aux liquides.

5. Tuyau suivant la revendication 1, **caractérisé en ce que** la couche de polymère (3) présente un certain degré de microporosité, de telle manière qu'elle soit perméable, dans une faible mesure, pour un polymère de matrice à introduire sous pression dans le tuyau intérieur en tissu de verre (2).

6. Tuyau suivant la revendication 1, **caractérisé en ce qu'**un polymère de matrice à introduire dans le tuyau intérieur en tissu de verre (2) se compose de résine durcissant à chaud, aussi fluide que possible, qui peut contenir une matière de charge, ou d'un système de résine durcissant à froid.

7. Tuyau suivant la revendication 1, **caractérisé en ce que** des parties du tuyau intérieur en tissu de verre (2) présentent des bandes chauffantes intégrées, qui peuvent produire de la chaleur par résistance, par l'application d'une tension, en vue du durcissement d'un polymère de matrice contenu dans le tuyau intérieur en tissu de verre (2).

8. Procédé pour la fabrication d'un tuyau renforcé résistant à la pression pour le soutien mécanique de têtes de bobines de machines électriques tournantes, **caractérisé par** les étapes consistant à:
- envelopper un faisceau de fibres de verre (1) avec un tuyau intérieur en tissu de verre (2),
- extruder une couche de polymère (3) sur le tuyau intérieur en tissu de verre (2) fourré ou laquer au moins une fois la surface du tuyau intérieur en tissu de verre (8) avec un polymère ou une solution de polymère, et
- envelopper le tuyau intérieur en tissu de verre (2) portant la couche de polymère avec un tuyau extérieur en tissu de verre (4).

9. Procédé suivant la revendication 8, **caractérisé par** l'étape supplémentaire consistant à:
- fixer le tuyau avec des éléments d'enroulement en l'enrobant avec des bandes ou des cordelières en tissu imprégnées, se trouvant dans l'état B, et durcir ces bandes ou cordelières de tissu lors d'un traitement thermique, ou
- coller le tuyau avec des éléments d'enroulement à soutenir en appliquant en plus des adhésifs aux endroits de contact ou en faisant pénétrer ultérieurement une laque-colle lors du laquage de l'ensemble de la tête de bobine.

10. Procédé suivant la revendication 9, **caractérisé par** les étapes supplémentaires consistant à:
- revêtir le tuyau extérieur en tissu de verre (4), lors de l'utilisation d'une couche de polymère (3) étanche aux gaz et aux liquides, avec une couche de polymère supplémentaire, qui reste dans l'état B,
- faire fondre cette couche de polymère après le montage au cours d'un traitement thermique, et
- durcir la couche de polymère supplémentaire.

11. Procédé suivant la revendication 7, **caractérisé par** les étapes supplémentaires consistant à:
- charger un polymère de matrice dans le tuyau intérieur en tissu de verre (2),
- faire traverser la couche de polymère (3) ou le tuyau extérieur (4) imprégné d'un polymère de matrice par le polymère de matrice et/ou coller des canaux perméables dans la couche de polymère (3).

12. Procédé suivant la revendication 10, **caractérisé par** l'étape supplémentaire consistant à:
- durcir le polymère de matrice durcissant à chaud, pour le soutien lors de la mise en marche de la machine, par la chaleur ainsi dégagée ou
- durcir le polymère de matrice durcissant à chaud par une excitation inductive ou capacitive, par exemple par des micro-ondes, ou par l'application d'une tension à des parties du tuyau, dans lesquelles par exemple des bandes chauffantes sont intégrées, ce qui produit de la chaleur par résistance.
